# EUROPEAN PATENT SPECIFICATION

(11) **EP 0 594 380 B1**
(45) Date of publication and mention of the grant of the patent: **14.08.1996**
(21) Application number: 93308265.3
(22) Date of filing: 18.10.1993
(51) Int. Cl.: B60C 11/04

(54) **Pneumatic tyre**
Luftreifen
Bandage pneumatique

(30) Priority: 19.10.1992 JP 306542/92
(43) Date of publication of application: 27.04.1994
(60) Divisional application: 95201970.1
(73) Proprietor: SUMITOMO RUBBER INDUSTRIES LIMITED, Kobe-shi Hyogo-ken (JP)
(72) Inventor: Tanaka, Masatoshi, Takarazuka-shi, Hyogo-ken (JP)
(74) Representative: Stewart, Charles Geoffrey

(56) References cited:
- FR-A- 2 398 625
- FR-A- 2 608 516
- US-A- 1 946 367
- US-A- 4 617 976
- PATENT ABSTRACTS OF JAPAN vol. 015, no. 354 (M-1155)6 September 1991 & JP-A-03 139 402 (SUMITOMO RUBBER IND. LTD.) 13 June 1991

## Description

The present invention relates to a pneumatic tyre having an improved tread portion reducing tyre noise without deteriorating wet performance.

Recently, as the noise generated by the car mechanism and body becomes less, the percentage of the noise generated by the tyres is increased, and so there is an increasing demand for a low noise tyre.

It is especially effective in reducing tyre noise to reduce a relatively high frequency noise to which the human ears are sensitive, that is, the noise whose frequency range is around 1 kHz.

Air resonance noise is such a high frequency tyre noise. The air resonance noise is explained as follows.

In the ground contacting patch of the tyre, an air tube is formed by the road surface and any continuous circumferential groove which is provided in the tyre tread portion. During running, the air tube is excited by air flow, tread deformation or movement, roughness of the road surface and the like, and a sound having a specific wave length which corresponds to twice the length of the air tube is generated.

Most of the tyre noise in the frequency range of 800 to 1.2k Hz generated by the tyre having a circumferential groove is such air resonance noise, and the frequency of the air resonance is almost constant independent of running speed.

Since it is known that air resonance can be prevented by decreasing the groove volume, it has been suggested to decrease the groove volume and/or the number of circumferential grooves. However, as a result, wet performance characteristics such as aquaplaning, wet grip and the like are invariably decreased.

A tyre according to the preamble of claim 1 is known, for example, from JP-A-3 139 402.

It is an object of the present invention to provide a pneumatic tyre in which, by reducing the air resonance noise, the overall tyre noise is reduced without sacrificing wet performance.

According to one aspect of the present invention, a pneumatic tyre comprises a tread portion with tread edges, a pair of axially spaced bead portions, and sidewall portions extending therebetween, said tread portion having a convex profile having a single radius or multiple radii, said tread portion being provided with a circumferential groove extending continuously in the circumferential direction of the tyre, defining groove edges, characterised by the said circumferential groove having a width of more than 25% of the ground contacting width, said circumferential groove being provided at the groove bottom with a plurality of circumferentially spaced load supporting protrusions, each said protrusion have a height substantially the same as the depth of the circumferential groove so as to be able to contact the ground, and the total ground contacting area of said protrusions is less than 20% of the total groove top area of the circumferential groove.

Embodiments of the present invention will now be described in detail in conjunction with the accompanying drawings, in which:
Fig.1 is a perspective view of a grooved tyre section;
Fig.2 is a cross sectional view of the circumferential groove of Fig.1 showing the section shape thereof;
Figs.3 and 4 are graphs showing the results of noise tests;
Fig.5 is a plan view of an embodiment of the present invention; and
Fig.6 is a plan view of another embodiment of the present invention.

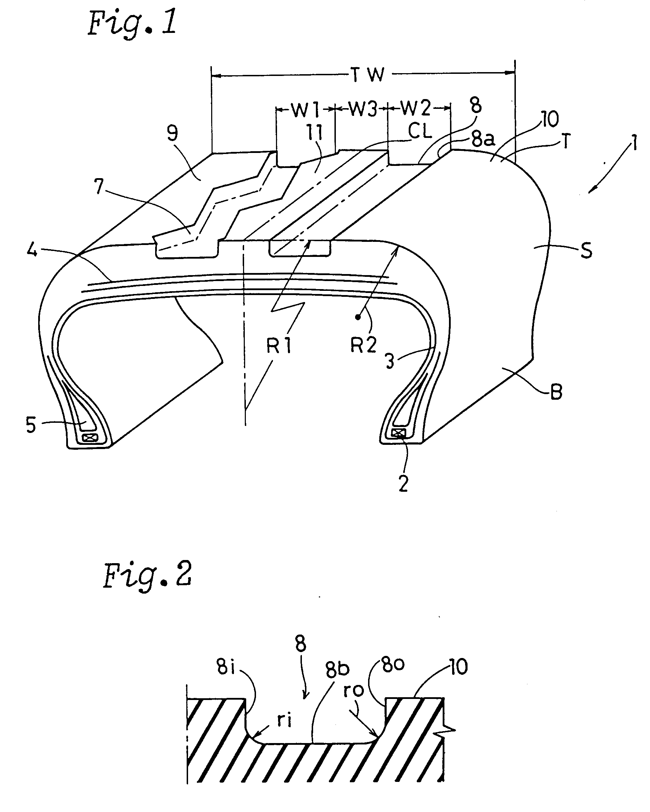

In Fig.1, the tyre 1 is a passenger radial tyre having an aspect ratio (tyre section height/tyre width) in the range of 0.4 to 0.6.

The tyre 1 comprises a radial ply carcass 3 extending between bead portions B through a tread portion T and sidewall portions S, and turned up around each bead core 2 from the axially inner side to the outer side of the tyre, a belt 4 disposed radially outside the carcass 3 and inside of the tread portion T, and a bead apex 5 disposed between the main portion and each turned up portion of the carcass and extending radially outwardly of each bead core 2.

The carcass 3 comprises at least one ply of radially arranged organic fibre cords such as nylon, rayon, polyester or the like.

The belt 4 comprises two or more crossed plies of high modulus cords such as steel, aromatic polyamide or the like laid at a relatively small angle of from 15 to 30 degrees with respect to the tyre circumferential direction.

The tread portion T has a convexly curved profile having a single radius or multiple radii.

The tread portion T is provided with at least one circumferential groove 7 and/or 8 extending continuously in the tyre circumferential direction of the tyre.

The width W of the circumferential groove 7 is more than 16% of the ground contacting width TW.

Here, the ground contacting width TW is the axial width between the axially outermost points of the ground contacting region of the tread surface when the tyre is mounted on its regular rim, inflated to its regular pressure, and loaded to its regular load. The regular rim is the rim officially recommended for the tyre by, for example, TRA (USA), ETRTO (Europe), JATMA (Japan) and the like, and the regular inner pressure and the regular load are the maximum air pressure and the maximum tyre load for the tyre officially specified in Air-pressure/Maximum-load Table by the same associations.

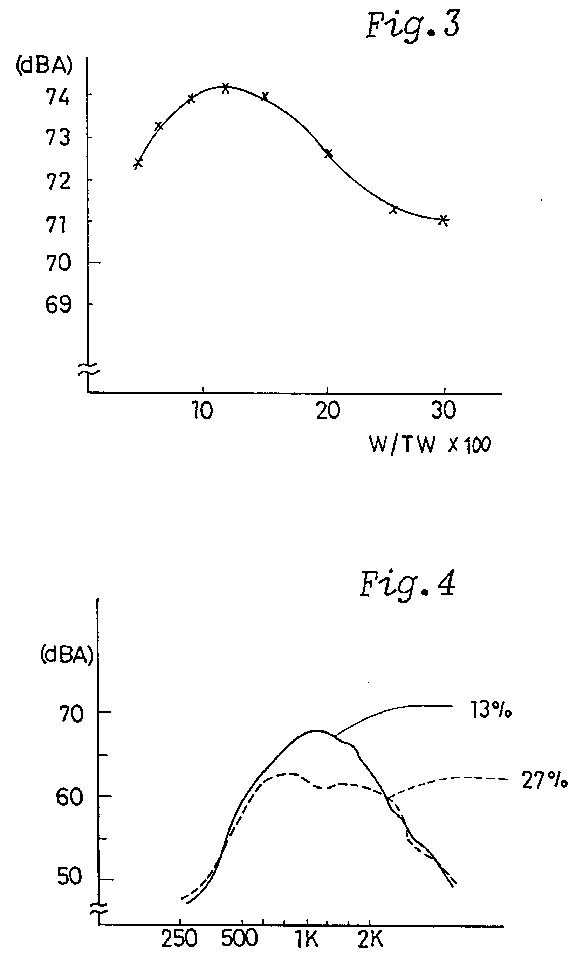

Fig.3 shows a test result showing the tyre noise level as a function of the percentage (W/WT x 100) of the groove width (W) to the ground contacting width (WT).

The test was made using 205/55R15 plane tyres provided with only one circumferential groove having a U-shaped cross section.

Changing the width (W) of the circumferential groove, the running noise of the test tyre was measured according to a JASO test procedure. The microphone position was 7.5 meters from the vehicle, the running speed was 60 km/h, and the test car was a Japanese made 2000cc passenger car.

By this test result, it was confirmed that, in the lower % range the noise level is decreased by decreasing the groove width (W). However, it was discovered that a single peak lies at around 13%, and in the range of over 13%, the noise level decreases with further increased groove width W. Further, the rate of decrease becomes remarkable from 16%.

Fig.4 shows the frequency spectrums at the peak (13%) and a higher percentage of 27%.

From this analysis, it was discovered that the noise around 1k Hz was remarkably decreased.

Thus, it was discovered that by setting the circumferential groove width over 16%, harsh 1k Hz noise is effectively reduced, and as a result, the overall tyre noise can be effectively reduced.

Therefore, as explained above, the width W of the circumferential groove was set to be more than 16% of the ground contacting width TW.

As known from Fig.3, if the width is smaller than 8% of TW, as the air resonance is controlled, such a narrow circumferential groove may be used in combination with the above-mentioned wider circumferential groove.

In other words, the tread portion is not provided with any circumferential groove having a width of from 8 to 16 % of the ground contacting width TW.

The depth of the circumferential groove 7, 8 is in the range of from 4 to 8 % of the ground contacting width TW.

In the tyre shown in Fig.1, the tread surface T is defined by a crown part having a single radius R1 of curvature having a centre on the tyre equator, and a pair of shoulder parts having a single radius R2 of curvature which is smaller than the radius R1.

The tread crown part is that part extending from the tyre equator CL towards each side thereof by 30% of the ground contacting width TW.

Each of the shoulder parts extends axially outwardly from each of the axial edges of the crown part, thereby having 20% or more of the tread ground contacting width TW.

The crown part and shoulder parts are connected smoothly without forming any inflection point.

Within the above-mentioned tread crown part, that is, within the 60% width, two circumferential grooves 7 and 8 are disposed one on each side of the tyre equator CL.

The widths W1 and W2 of the circumferential grooves 7 and 8, respectively, are more than 16% of the ground contacting width TW. However, one of them may be a smaller width of less than 8%, as explain above.

Further, the total (W1+W2) of the groove widths W1 and W2 is preferably set to be not more than 50% of the ground contacting width TW.

If the total (W1+W2) is more than 50%, the dry grip, steering stability and the like are deteriorated.

Between the above-mentioned two circumferential grooves 7 and 8, a circumferentially extending continuous centre rib 11 is formed on the tyre equator.

The width W3 of the centre rib 11 is in the range of 5 to 15 % of the ground contacting width TW.

If the width W3 is less than 5%, the axial rigidity of the rib decreases and the rib is liable to become a source of noise. Further, the rib wears rapidly to cause uneven wear.

On the axially outer side of each of the circumferential grooves 7 and 8, a circumferentially extending continuous shoulder rib 9 and 10 is formed.

In this tyre, further, the circumferential groove 8 is formed as a straight groove, and the other circumferential groove 7 is formed as a zigzag groove. Accordingly, the tread pattern is not symmetrical with respect to the tyre equator CL.

This asymmetrical tyre is mounted on a car in such a manner that the straight circumferential groove 8 is located on the outside of the car, and the zigzag circumferential groove 7 is located on the inside of the car.

Since the shoulder rib 10 located axially outwards of the straight groove 8 has a larger rigidity than the other shoulder rib 9 located axially outwards of the zigzag groove 7, the deformation and movement during cornering is controlled to improve steering stability.

The zigzag circumferential groove 7 improves the wet grip due to a so called wiping effect of the zigzag edges.

As the straight groove generates less noise than the zigzag groove, such arrangement helps to decrease the tyre noise.

When the groove edge has a zigzag configuration as above, a wavy configuration or the like, in order to determine the above-mentioned widths W1, W3, etc., the centre line of the amplitude thereof, that is, a straight circumferential line drawn in the centre between the axially outermost point and the axially innermost point of the edge is used.

The circumferential grooves 7 and 8 have a cross sectional shape shown in Fig.2, in which the groove 8 is taken as an example.

The axially inner groove wall (8i) and the axially outer groove wall (8o) are perpendicular to the groove bottom (8b) which is flat. The corners therebetween are rounded. The radius (ro) of the curvature of the axially outer corner is in the range of from 1.5 to 3 times the radius (ri) of the curvature of the axially inner corner, whereby the shoulder rib 10 is increased in rigidity to improve the steering stability during cornering, and the centre rib 11 is decreased in rigidity to improve ride comfort and wet grip.

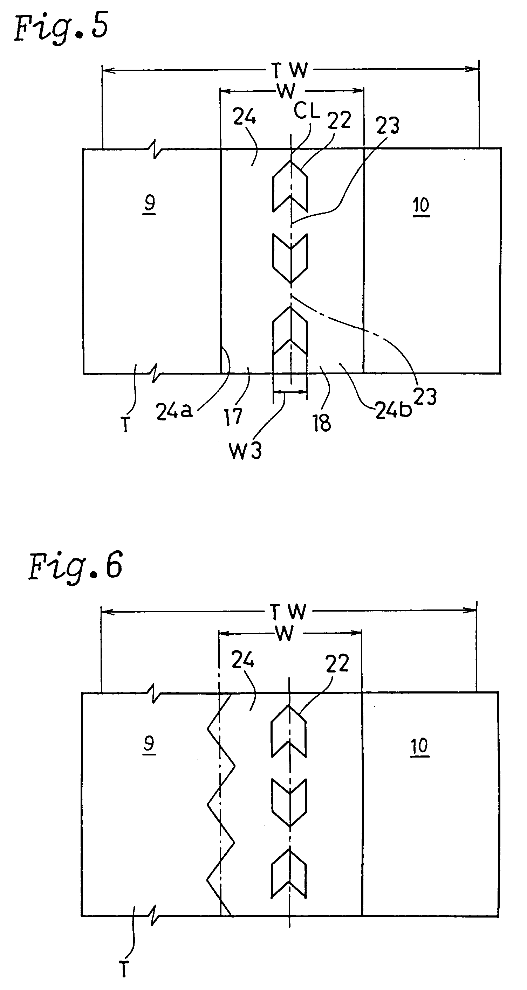

Fig.5 shows an embodiment of the present invention. The above explained internal tyre structure such as a carcass, belt etc., can be used here.

In this embodiment, the tread portion T is provided within the above-explained tread crown part (60% width central tread part) with a wide circumferential groove 24.

The circumferential groove 24 has a width (W) of more than 25% of the ground contacting width (TW), and is centred on the tyre equator CL.

When such a very wide groove is provided in the tread centre, the groove is liable to be deformed due to tyre load in use, and the underlying structures such as the carcass and belt are liable to be deformed.

In order to avoid such deformation, the groove bottom 24b is provided with a plurality of circumferentially spaced load supporting protrusions 22.

The height of each protrusion is substantially the same as the groove depth.

In the example shown in Fig.5, the protrusions 22 are independent blocks disposed on the tyre equator CL.

Each block has a pair of straight axial edges extending parallel to the tyre equator and a pair of V-shaped bent circumferential edges extending parallel to each other, thereby providing an overall configuration like the feathers of an arrow.

In respect to the direction of the arrow, the blocks are alternately arranged in the circumferential direction.

The total ground contacting area of the protrusions 22 within the groove 24 is limited to be less than 20% of the total groove top area (S) of the circumferential groove 24. The total groove top area (S) is calculated by multiplying the groove width (W) by the groove length in the tyre circumferential direction.

If the total ground contacting area is more than 20%, the noise generated by the air flowing between the adjacent blocks and between the block and the adjacent groove wall increases, and the wet performance decreases.

More preferably, the total ground contacting area of the protrusions 22 is in the range of from 10 to 15 % of the total groove top area (S).

Further, the width W3 of the block or protrusion 22 is preferably in the range of from 5 to 15% of the ground contacting width TW.

Accordingly, the existence of the protrusions 22 within the groove prevents air resonance, and increases the overall ground contacting area to prevent deterioration in the dry grip performance, steering stability and wear performance.

The corners between the groove side walls 24a and groove bottom 24b are rounded.

By such an arrangement, the wide groove 24 can be regarded as being made up of two narrow circumferentially extending groove parts 17 and 18 and axially extending groove parts 23 therebetween.

Fig.6 shows a modification of the tread pattern shown in Fig.5, wherein one of the groove edges is straight, but the other edge to be located on the inside of the car for the same reason as explained above, is zigzag.

In the present invention, axial grooves, sipes (cuts or narrow slits) and the like can be formed in the ribs such as the centre rib 11 in the first embodiment and the shoulder ribs 9 and 10 in the first and second embodiments.

## Claims

1. A pneumatic tyre comprising a tread portion (T) with tread edges, a pair of axially spaced bead portions (B), and sidewall portions (S) extending therebetween, said tread portion (T) having a convex profile having a single radius or multiple radii, said tread portion (T) being provided with a circumferential groove (24) extending continuously in the circumferential direction of the tyre, defining groove edges, the said circumferential groove (24) having a width of more than 25% of the ground contacting width (TW), characterised by said circumferential groove (24) being provided at the groove bottom with a plurality of circumferentially spaced load supporting protrusions (22), each said protrusion (22) having a height substantially the same as the depth of the circumferential groove (24) so as to be able to contact the ground, and the total ground contacting area of said protrusions (22) is less than 20% of the total groove top area of the circumferential groove (24).

2. A pneumatic tyre according to claim 1, characterised in that the circumferential groove (7) is a straight groove.

3. A pneumatic tyre according to claim 1, characterised in that said circumferential groove (7 or 8) is a zigzag groove.

4. A pneumatic tyre according to claim 1,
characterised in that the groove edge adjacent to one of the tread edges is straight, and the groove edge adjacent to the other tread edge is zigzag or wavy.

5. A pneumatic tyre according to claim 1, characterised in that the width (W3) of each said protrusion (22) is in the range of from 5 to 15 % of the ground contacting width (TW).

## Patentansprüche

1. Luftreifen der umfaßt einen Laufflächenabschnitt (T) mit Laufflächenrändern, ein Paar von axial beabstandeten Wulstabschnitten (B), und sich dazwischen erstreckenden Seitenwandabschnitten (S), wobei der Laufflächenabschnitt (T) ein konvexes Profil mit einem einzigen Radius oder mehreren Radien aufweist, wobei der Laufflächenabschnitt (T) mit einer Umfangsrille (24) versehen ist, die sich durchgehend in Umfangsrichtung des Reifens erstreckt und Rillenränder definiert, wobei die Umfangsrille (24) eine Breite von mehr als 25 % der Bodenkontaktbreite (TW) aufweist, dadurch gekennzeichnet, daß diese Umfangsrille (24) an dem Rillenboden mit einer Mehrzahl von in Umfangsrichtung beabstandeten lasttragenden Vorsprüngen (22) versehen ist, wobei jeder Vorsprung (22) eine Höhe aufweist, die im wesentlichen gleich der Tiefe der Umfangsrille (24) ist um den Boden kontaktieren zu können, und wobei der gesamte Bodenkontaktbereich dieser Vorsprünge (22) weniger als 20 % der Gesamtrillenoberfläche der Umfangsrille (24) ist.

2. Luftreifen nach Anspruch 1, dadurch gekennzeichnet, daß die Umfangsrille (7) eine gerade Rille ist.

3. Luftreifen nach Anspruch 1, dadurch gekennzeichnet, daß die Umfangsrille (7 oder 8) eine Zickzack-Rille ist.

4. Luftreifen nach Anspruch 1, dadurch gekennzeichnet, daß der Rillenrand benachbart zu einem der Laufflächenränder gerade ist und der Rillenrand benachbart zu dem anderen Laufflächenrand zickzack- oder wellenförmig ist.

5. Luftreifen nach Anspruch 1, dadurch gekennzeichnet, daß die Breite (W3) jedes Vorsprungs (22) in dem Bereich von 5 bis 15 % der Bodenkontaktbreite (TW) liegt.

## Revendications

1. Pneumatique comprenant une partie (T) de bande de roulement ayant des bords de bande de roulement, deux parties axialement espacées (B) de talon, et des parties (S) de flanc placées entre ces parties, la partie de bande de roulement (T) ayant un profil convexe ayant un seul rayon ou plusieurs rayons, la partie (T) de bande de roulement ayant une gorge circonférentielle (24) disposée de façon continue dans la direction circonférentielle du pneumatique et délimitant des bords de gorge, la gorge circonférentielle (24) ayant une largeur supérieure à 25 % de la largeur de contact avec le sol (TW), caractérisé en ce que la gorge circonférentielle (24) a, au fond de la gorge, plusieurs saillies (22) de support de charge qui sont espacées circonférentiellement, chaque saillie (22) ayant une hauteur pratiquement égale à la profondeur de la gorge circonférentielle (24) afin qu'elle puisse être au contact avec le sol, la surface totale de contact avec le sol des saillies (22) étant inférieure à 20 % de la surface totale de la partie supérieure de la gorge circonférentielle (24).

2. Pneumatique selon la revendication 1, caractérisé en ce que la gorge circonférentielle (7) est une gorge rectiligne.

3. Pneumatique selon la revendication 1, caractérisé en ce que la gorge circonférentielle (7 ou 8) est une gorge sinueuse.

4. Pneumatique selon la revendication 1, caractérisé en ce que le bord de la gorge adjacent à l'un des bords de la bande de roulement est rectiligne, et le bord de la gorge adjacent à l'autre bord de la bande de roulement est sinueux ou ondulé.

5. Pneumatique selon la revendication 1, caractérisé en ce que la largeur (W3) de chaque saillie (22) est comprise entre 5 et 15 % de la largeur (TW) de contact avec le sol.
